# EUROPEAN PATENT SPECIFICATION

(11) **EP 1 371 887 B1**
(45) Date of publication and mention of the grant of the patent: **23.03.2005**
(21) Application number: 03006566.8
(22) Date of filing: 24.03.2003
(51) Int. Cl.: F16K 21/12

(54) **Timed faucet**
Hahn mit Zeitschaltwerk
Robinet temporisé

(30) Priority: 13.06.2002 IT MI20021314
(43) Date of publication of application: 17.12.2003
(73) Proprietor: Silfra S.P.A., 28060 Cureggio (Novara) (IT)
(72) Inventor: Baki, Gyozo, 28021 Borgomanero (Novara) (IT)
(74) Representative: Cicogna, Franco

(56) References cited:
- EP-A- 1 138 895
- WO-A-01/31127
- DE-A- 2 416 286
- US-A- 3 674 237
- US-A- 4 268 008

## Description

### BACKGROUND OF THE INVENTION

The present invention related to a timed faucet including means for continuously changing the delivery time and flow-rate thereof.

A lot of different types of timed faucets, based on very different making principles, are already known.

The prior timed faucets have very complex constructions, requiring that additional outer elements be provided for properly operating the timed faucet.

Another problem affecting prior timed faucets is that, in order to adjust the flow-rate and delivery time of said faucets, mutual interactions frequently occur, with a consequent calibrating difficulty.

Yet another problem affecting prior timed faucets is that, in order to change the flow-rate and delivery time of said faucets, it is necessary to perform very complex and difficult operations.

A faucet according to the preamble of claim 1 is disclosed in document US 3 674 237.

### SUMMARY OF THE INVENTION

Accordingly, the aim of the present invention is to overcome the above mentioned drawbacks, by providing a timed faucet, with means for changing the delivery time and flow-rate thereof, allowing to adjust, in a very simple manner and without disassembling any components of the faucet, the water inlet time, the flow-rate thereof and simultaneously to hold in a cleaned condition the water passage.

Within the scope of the above mentioned aim, a main object of the present invention is to provide such a timed faucet which is directly provided in its inside with any fittings required for a proper operation of the faucet, without the requirement of providing additional elements.

Yet another object of the present invention is to provide such a timed faucet which, owing to its specifically designed constructional features, is very reliable and safe in operation.

Yet another object of the present invention is to provide such a timed faucet, including means for continuously changing the delivery time and flow-rate thereof, which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a timed faucet, including means for continuously changing the delivery time and flow-rate thereof, characterized in that said timed faucet comprises, inside a valve body defining an inlet and outlet duct, a shutter piston delimiting a load chamber communicating with said inlet through adjusting means for adjusting the delivery time of said faucet, said adjusting means being adapted to be calibrated from the outside of said valve body, further changing means for changing the flow-rate of said faucet, independent from said adjusting means and arranged in said inlet being moreover provided.

### BRIEF DESCRIPTION OF THE DRAWINGS

Further characteristics and advantages of the present invention will become more apparent hereinafter from the following detailed disclosure of a preferred, though not exclusive, embodiment of a timed faucet, including means for continuously changing the water delivery time and flow-rate thereof, which is illustrated, by way of a merely indicative but not limitative example, in the accompanying drawings, where:

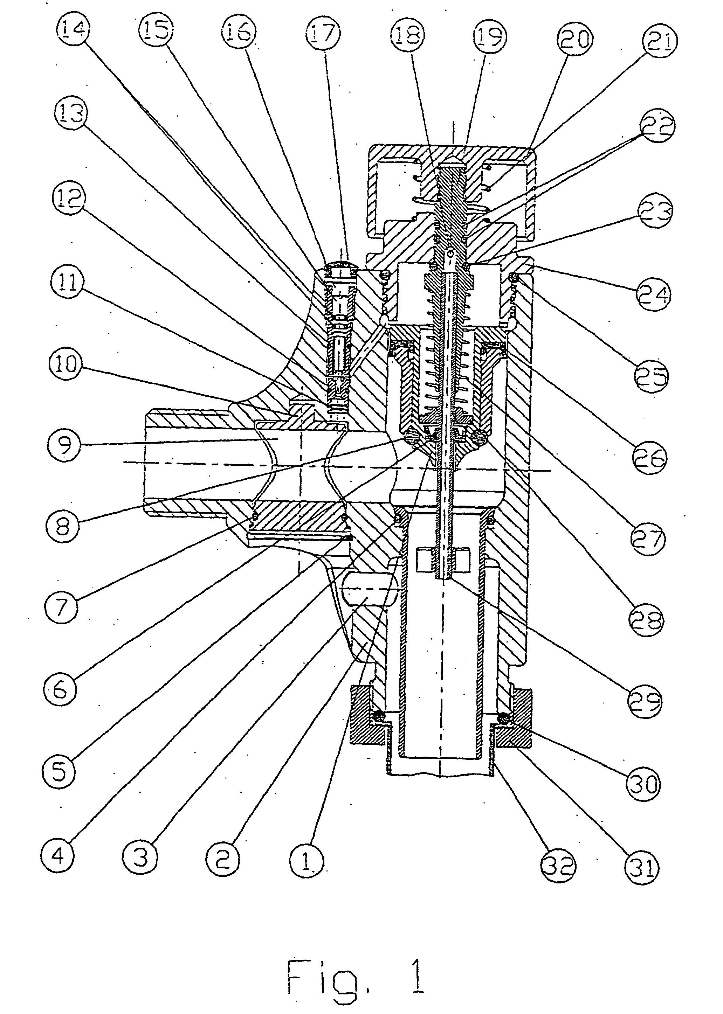

Figure 1 is a schematic cross-sectional view illustrating the timed faucet according to the present invention, and clearly showing all the component parts of said timed faucet;
Figure 2 is a detail view illustrating a detail of the timed faucet in a closure position thereof;
Figure 3 is a further detail view illustrating the detail of the timed faucet, in an opening condition thereof for delivering water;
Figure 4 illustrates the closure operating step of the timed faucet according to the invention;
Figure 5 is a further detail view illustrating the adjusting means for adjusting the water delivery time;
   and
Figure 6 is a further detail view illustrating the changing means for changing the timed faucet water flow-rate.

### DESCRIPTION OF THE PREFERRED EMBODIMENTS

With reference to the number references of the above mentioned figures, the timed faucet, including means for continuously changing the delivery time and flow-rate thereof, according to the present invention, comprises, inside a valve body 2, an inlet for introducing an inlet flow A and an outlet duct 32.

The outlet duct 32, in particular, is coupled, through a cap 31 and a gasket 30, to the valve body, from which a water flow B is delivered.

Inside the valve body is provided a shutter piston 1, including an engagement gasket 8 engaging with a tube facing the outlet duct and having a further gasket or seal 4.

On the shutter piston 1 is arranged a sealing or tightness gasket 26, operating inside said valve body.

The shutter piston 1 defines a load chamber Y, which communicates with a duct therethrough a load flow C is conveyed, through the interposition of adjusting means for adjusting the delivery time, which adjusting means will be disclosed in a more detailed manner hereinafter.

Inside said shutter 1 is arranged a control rod 19, including an inlet hole 18 for allowing water to enter said control rod, which is connected with an inner tube 29, leading to the outlet duct.

The control rod, as shown, comprises further gaskets 22 and 23 for providing a sealed relationship with respect to the screw element 14, inside of which said control rod can slidably move.

The control rod is driven by a control rod spring 27, abutting between a shoulder of said control rod and a spring ring element 28, arranged at the bottom end portion above the region affected by a sealing gasket 6.

To said control rod is coupled a push-button 20, affected by a push-button spring 21.

The screw element, in turn, is coupled to the mentioned valve body through the interposition of a further gasket or sealing element 25.

The adjusting means for adjusting the delivery time substantially comprise an insert element 16, thereabout is provided an adjusting screw for adjusting the delivery time, which adjusting screw 15 is coupled through a further gasket 14.

The insert element comprises, at the bottom thereof, a filter 11 and sealing gaskets 12 and 13 providing tightness with respect to the outside environment.

The adjusting screw comprises a stem controlling a calibrated hole, by means of which is changed the load water flow F through the adjusting insert element.

Moreover, a passage hole 33 is provided, communicating the flow F with the flow C conveyed into the chamber Y.

Changing means are moreover provided for changing the faucet flow-rate, said changing means being independent from the adjusting means and being arranged in the inlet of the water flow A.

Said adjusting means comprise a rotary valve for adjusting the water flow-rate, said rotary valve 9 defining a rotary duct, which can be rotated through a rotation range Z, in order to control the inlet duct flow.

Furthermore, are provided a gasket 7 with a related Seeger ring 5 and a top valve guide element 10, allowing to hold in position the flow-rate adjusting valve.

The assembly comprises moreover on the valve body an air inlet hole 3.

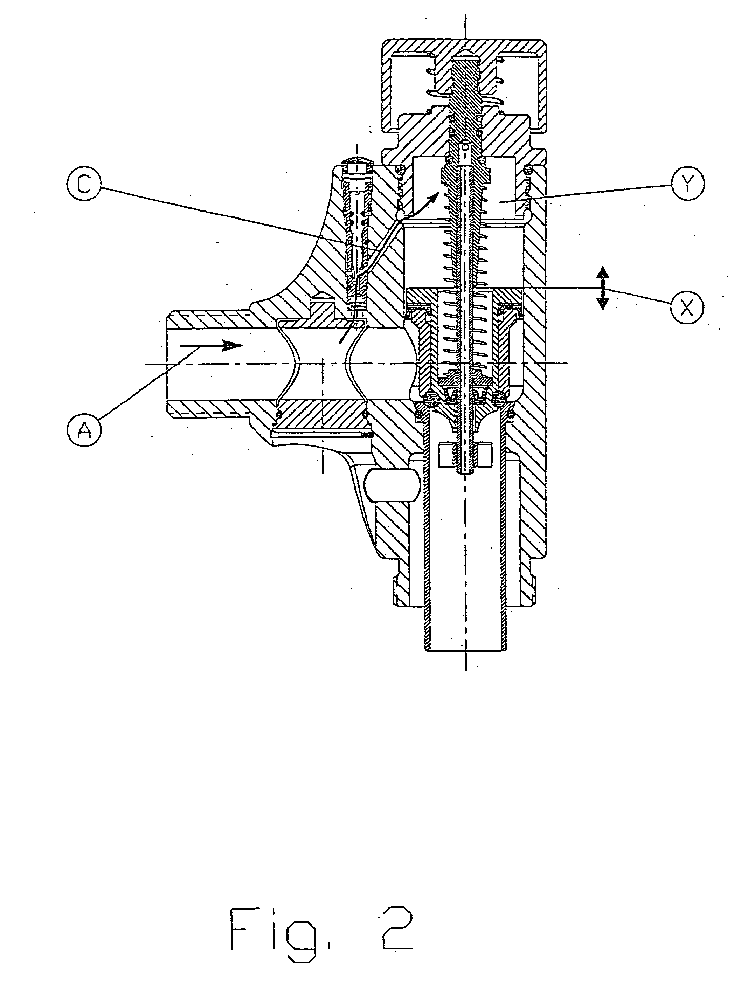

Thus, with the timed faucet in a closed condition (figure 2), the piston 1 should have performed the operating stroke X, thereby abutting on the seat of the tube, so that the water is prevented from flowing out.

Through the delivery time adjusting valve will pass the water flow C which will occupy the volume Y.

The pressure exerted by water on the top portion of the piston will cause said piston to be downward driven to its abutment means, thereby preventing any flow through the underlying tube.

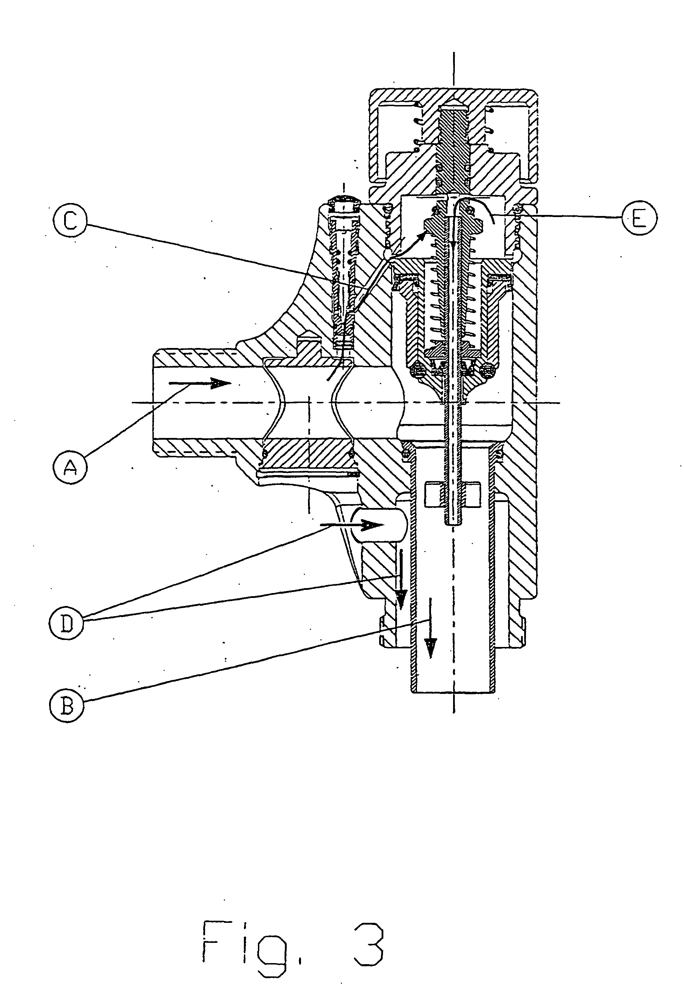

As the faucet is opened (figure 3), the push-button 20 coupled to the control rod 19 will be pressed, said control rod being provided with a top perforated portion.

Thus, such a downward displacement will clear the inlet hole 18, thereby water held in the chamber Y can flow through the inner tube 29, so as to produce the water flow E.

Under these conditions, the pressure exerted on the bottom surface of the piston will be greater than that on the top portion thereof, thereby providing a displacement force displacing or driving upward said piston, to clear the water passage area, thereby providing the outward directed water flow B.

As stated, the air inlet hole 3 is moreover provided, which will generate, with the timed faucet in its open condition, an air flow D, provided for increasing the water outlet rate.

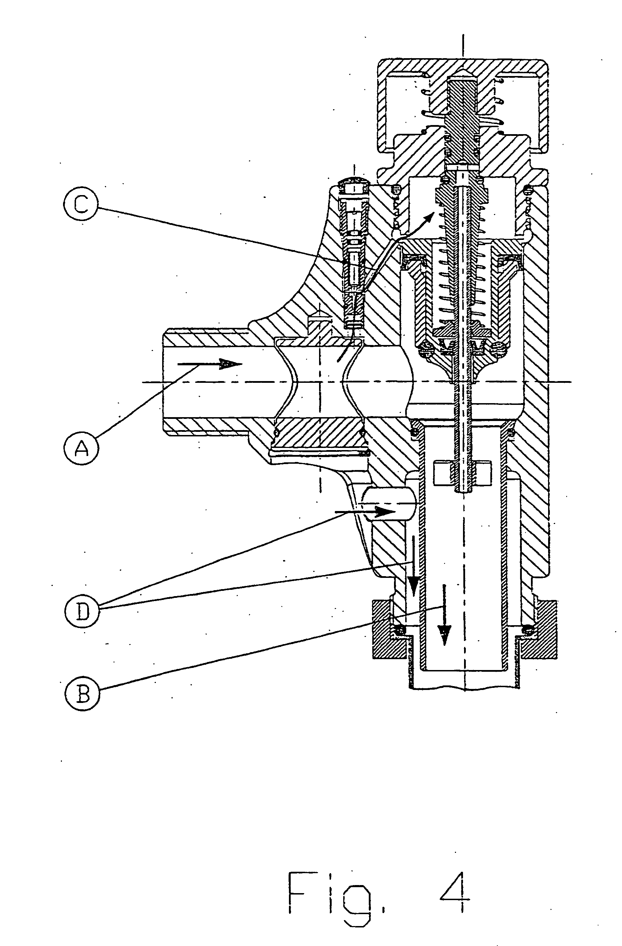

The closing operation (figure 4) will occur as the pressure applied to the top portion of the piston by the flow C will be again greater or larger than that on the bottom surface of said piston, thereby providing an urging force driving downward said piston.

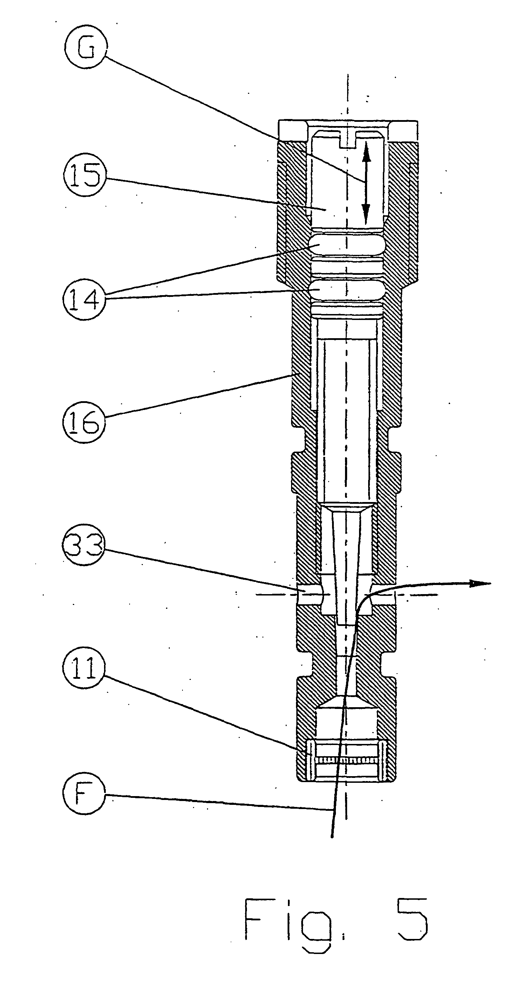

In this connection it should be apparent that the closure time will be adjusted through the valve shown in figure 5.

The screw element, having a frustum of cone shaped end portion, the sealing coupling of which is provided by two O-ring elements, allows to change the amplitude of the passage section providing the water flow F by operating said screw element.

In particular, by turning the screw element to provide a downward displacement, the flow area will be decreased, thereby the entering water will be decreased, while the closure time will increase

Vive versa, by upward displacing the mentioned screw, the time will decrease.

Such an adjustment can be performed, in a very simple manner, by a screw driver, after having removed the covering element 17.

Upstream of said valve is arranged the filter 11, filtering possible impurities, thereby preventing problems. related to possible lockings of the passage sections.

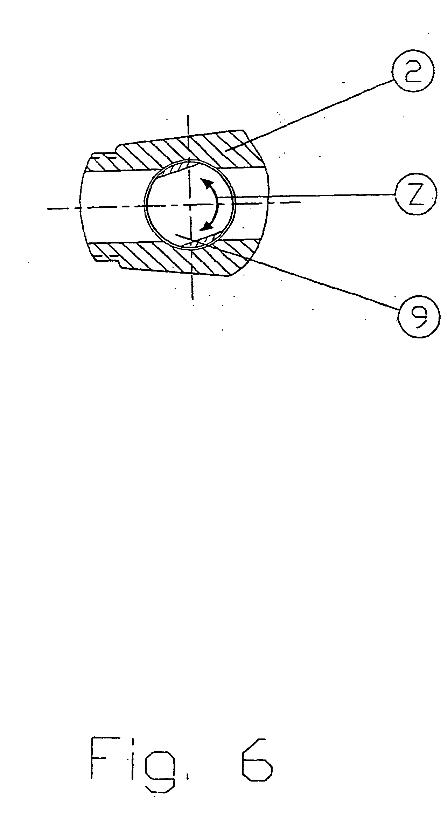

In order to adjust the water flow rate it is sufficient to operate the valve shown in figure 6.

Actually, by turning said valve in one of the two turning directions Z, the water passage area will be decreased, and, consequently, also the water flow rate will be decreased; such an adjustment being performed by merely using a screw driver.

From the above disclosure it should be apparent that the invention fully achieves the intended aim and objects.

In particular, the invention provides a timed faucet including a very reduced number of component elements and having greatly simplified constructional features.

Moreover, all of the adjustment operations can be performed in a very simple manner from outside of the faucet, without the need of using specifically designed adjusting tools.

The invention, as disclosed, is susceptible to several modifications and variations, all of which will come within the scope of the invention.

Moreover, all the constructional details can be replaced by other technically equivalent elements.

In practicing the invention, the used materials, as well as the contingent size and shaped, can be any, depending on requirements.

## Claims

1. A timed faucet, including means for continuously changing the delivery time and flow-rate thereof, said timed faucet comprising, inside a valve body (2) defining an inlet duct and an outlet duct (32), a shutter piston (1) delimiting a load chamber (Y) communicating with said inlet duct trough delivery time adjusting means (15, 16) for adjusting the delivery time of said faucet, flow-rate changing means (9) for changing the flow-rate of said faucet, said flow-rate changing means (9) being independent from said delivery time adjusting means (15, 16) and arranged in said inlet duct, **characterized in that** said delivery time adjusting means (15, 16) are adapted to be adjustably operated from the outside of said valve body (2).

2. A timed faucet, according to claim 1, **characterized in that** said delivery time adjusting means (15, 16) comprise an insert element (16) communicating with said inlet duct and controlling the communicating duct with said load chamber (Y), in said insert element (16) being provided an adjusting screw (15) having an adjusting screw stem controlling the passage cross section of a hole defined in said insert element (16).

3. A timed faucet, according to claims 1 and 2, **characterized in that** said timed faucet further comprises, at an end portion of said insert element (16), a filter (11).

4. A timed faucet, according to claim 1, **characterized in that** said flow-rate changing means (9) comprise a flow-rate adjusting valve (9) arranged in said inlet duct and rotatable about a rotary axis substantially perpendicular to an axis of said inlet duct, said flow-rate adjusting valve (9) defining an inside duct for allowing water to pass therethrough, said cut having a cross-section which is adjusted and controlled by said valve (9).

5. A timed faucet, according to claims 1 to 4, **characterized in that** said timed faucet comprises moreover a control rod (19) to which is coupled an inner pipe tightly passing through said shutter piston (1) and leading to said outlet duct (32), said control rod (19) having holes communicating with said load chamber (Y), on said control rod operating a control rod spring (27) butting on a spring ring element (28), being moreover provided a push-button (20) for operating said control rod (19), on said push-button (20) operating a push-button spring (21).

6. A timed faucet, according to one or more of the preceding claims, **characterized in that** said timed faucet comprises, on said valve body (12), an air inlet hole (3) for enhancing the water outlet rate.

## Patentansprüche

1. Hahn mit Zeitschaltwerk einschließlich eines Mittels zum fortlaufenden Verändern seiner Ausflußzeit und seiner Durchflußrate, wobei der Hahn mit Zeitschaltwerk im Inneren Folgendes umfaßt: einen Ventilkörper (2), der einen Einlaßkanal und einen Auslaßkanal (32) definiert, einen Verschlußkolben (1), der eine Lastkammer (Y) abgrenzt, die durch Ausflußzeitregulierungsmittel (15, 16) zum Regulieren der Ausflußzeit des Hahns mit dem Einlaßkanal in Verbindung steht, Durchflußratenveränderungsmittel (9) zum Verändern der Durchflußrate des Hahns, wobei die Durchflußratenveränderungsmittel (9) von den Ausflußzeitregulierungsmitteln (15, 16) unabhängig sind und im Einlaßkanal angeordnet sind, **dadurch gekennzeichnet, daß** die Ausflußzeitregulierungsmittel (15, 16) dazu geeignet sind, von außerhalb des Ventilkörpers (2) regulierbar betrieben zu werden.

2. Hahn mit Zeitschaltwerk nach Anspruch 1, **dadurch gekennzeichnet, daß** die Ausflußzeitregulierungsmittel (15, 16) ein Einsatzelement (16) umfassen, das mit dem Einlaßkanal in Verbindung steht und den mit der Lastkammer (Y) verbindenden Kanal steuert, wobei im Einsatzelement (16) eine Regulierungsschraube (15) bereitgestellt ist, die einen Regulierungsschraubenschaft aufweist, der den Durchgangsquerschnitt einer im Einsatzelement (16) definierten Öffnung steuert.

3. Hahn mit Zeitschaltwerk nach Anspruch 1 und 2, **dadurch gekennzeichnet, daß** der Hahn mit Zeitschaltwerk ferner an einem Endabschnitt des Einsatzelements (16) einen Filter (11) umfaßt.

4. Hahn mit Zeitschaltwerk nach Anspruch 1, **dadurch gekennzeichnet, daß** die Durchflußratenveränderungsmittel (9) ein Durchflußratenregulierungsventil (9) umfassen, das im Einlaßkanal angeordnet ist und um eine Drehachse drehbar ist, die im Wesentlichen rechtwinkelig zu einer Achse des Einlaßkanals verläuft, wobei das Durchflußratenregulierungsventil (9) einen inneren Kanal definiert, um Wasser ein Hindurchverlaufen zu gestatten, wobei der Kanal einen Querschnitt aufweist, der durch das Ventil (9) reguliert und gesteuert wird.

5. Hahn mit Zeitschaltwerk nach Anspruch 1 bis 4, **dadurch gekennzeichnet, daß** der Hahn mit Zeitschaltwerk darüber hinaus einen Steuerstab (19) umfaßt, mit dem ein Innenrohr gekoppelt ist, das fest sitzend durch den Verschlußkolben (1) verläuft und zum Auslaßkanal (32) führt, wobei der Steuerstab (19) Öffnungen aufweist, die mit der Lastkammer (Y) in Verbindung stehen, der Steuerstab durch eine Steuerstabfeder (27) betrieben wird, die auf ein Federringelement (28) auftrifft, und darüber hinaus ein Druckknopf (20) bereitgestellt ist, um den Steuerstab (19) zu betätigen, und der Druckknopf (20) durch eine Druckknopffeder (21) betrieben wird.

6. Hahn mit Zeitschaltwerk nach einem oder mehreren der vorhergehenden Ansprüche, **dadurch gekennzeichnet, daß** der Hahn mit Zeitschaltwerk am Ventilkörper (12) eine Lufteinlaßöffnung (3) aufweist, um die Wasserauslaßrate zu steigern.

## Revendications

1. Un robinet temporisé incluant des moyens pour modifier continuellement la durée de fourniture et son débit, ledit robinet temporisé comprenant, à l'intérieur d'un corps de soupape (2) définissant un conduit d'entrée et un conduit de sortie (32), un piston obturateur (1) délimitant une chambre de chargement (Y) communiquant avec ledit conduit d'entrée par l'intermédiaire de moyens de réglage de durée de fourniture (15, 16) pour régler la durée de réglage dudit robinet, des moyens de modification de débit (9) pour modifier le débit dudit robinet, lesdits moyens de modification de débit (9) étant indépendants desdits moyens de réglage de la durée de fourniture (15, 16) et disposés dans ledit conduit d'entrée, **caractérisé en ce que** lesdits moyens de réglage de durée de fourniture (15, 16) sont adaptés pour être actionnés de façon réglable à partir de l'extérieur dudit corps de soupape (2).

2. Un robinet temporisé selon la revendication 1, **caractérisé en ce que** lesdits moyens de réglage de durée de fourniture (15, 16) comprennent un élément d'insertion (16) communiquant avec ledit conduit d'entrée et commandant le conduit communiquant avec ladite chambre de chargement (Y), une vis de réglage (15) ayant une tige de vis de réglage commandant la section transversale de passage d'un trou défini dans ledit élément d'insert (16) étant prévue dans ledit élément d'insertion (16).

3. Un robinet temporisé selon les revendications 1 et 2, **caractérisé en ce que** ledit robinet temporisé comprend en outre, à une partie d'extrémité dudit élément d'insertion (16), un filtre (11).

4. Un robinet temporisé selon la revendication 1, **caractérisé en ce que** lesdits moyens de modification du débit (9) comprennent une vanne de réglage de débit (9) agencée dans ledit conduit d'entrée et pouvant tourner autour d'un axe de rotation sensiblement perpendiculaire à un axe dudit conduit d'entrée, ladite vanne de réglage de débit (9) définissant un conduit interne pour permettre à l'eau de passer à travers, ledit conduit ayant une section transversale qui est réglée et commandée par ladite vanne (9).

5. Un robinet temporisé selon les revendications 1 à 4, **caractérisé en ce que** ledit robinet temporisé comprend en outre une tige de commande (19) à laquelle est reliée un tuyau interne passant de façon étanche à travers ledit piston obturateur (1) et conduisant audit conduit de sortie (32), ladite tige de commande (19) ayant des trous communiquant avec ladite chambre de chargement (Y), un ressort de tige de commande (27) venant en butée contre un élément annulaire de ressort (28) agissant sur ladite tige de commande, et un bouton poussoir (20) étant en outre prévu pour actionner ladite tige de commande (19), un ressort de bouton poussoir (21) agissant sur ledit bouton poussoir (20).

6. Un robinet temporisé selon une ou plusieurs des revendications précédentes, **caractérisé en ce que** ledit robinet temporisé comprend, sur ledit corps de soupape (12), un trou d'entrée d'air (3) pour améliorer le débit de sortie d'eau.
